# EUROPEAN PATENT APPLICATION

(11) **EP 4 466 986 A1**
(43) Date of publication of application: **27.11.2024**
(21) Application number: 23175396.3
(22) Date of filing: 25.05.2023
(51) Int. Cl.: A01J 5/017

(54) **MILKING ROBOT AND METHOD FOR ATTACHING TEAT CUPS TO A COW IN AN AUTOMATED MILKING PROCESS BY A MILKING ROBOT**

(71) Applicant: GEA Farm Technologies GmbH, 59199 Bönen (DE)
(72) Inventor: JOHNIGK, Andre, 58730 Fröndenberg (DE)
(74) Representative: Kleine, Hubertus

(57) **Abstract**

The invention relates to a method for attaching teat cups (15) in an automated milking process, wherein the automated milking process is performed by a milking robot (10) that is arranged for sequentially attaching the teat cups (15) to teats (3) of a cow (1), the method comprising the steps of:
e) determining an identifier of a cow (1) to be milked;
f) sequentially attempting to attach the four teat cups (15) to the identified cow (1), following an attachment sequence in which the four teat cups (15) are to be attached;
g) measuring at least one parameter that characterizes the attachment step of at least one of the teat cups (15) to the respective teat (3); and
h) deriving at least one optimized sequence for the attachment of the four teat cups (15) to the identified cow (1) by machine learning based on the at least one measured parameter.

The invention further relates to a milking robot (10) and a computer program product that is designed to perform the method.

## Description

The invention relates to a method for attaching teat cups in an automated milking process, wherein the automated milking process is performed by a milking robot that is arranged for sequentially attaching teat cups to teats of a cow. The invention further relates to a milking robot arranged for sequentially attaching teat cups to teats of a cow, comprising a sensor for assessing the attachment process, and to a computer program product for performing the method.

In automated milking, a robot is used to attach the teat cups of a milking gear to the teats of the milking animal, in particular a cow. In order to do so, information relating to the spatial position of the teats is required. Usually, three-dimensional (3D) information relating to the position of the teats in space are determined, for example by a stereoscopic method using two cameras or by imaging combined with "time of flight" (TOF) measurements using only one camera.

On the basis of the gathered information relating to the position of the teats, a device for placing the teat cups onto the teats can be actuated. In practice, robot arms are commonly used for this purpose which e.g. grip teat cups one after the other and place them onto the teats. Alternatively, milking robots are used in which a complete milking cluster with four teat cups is mounted at the robot arm, with the teat cups being capable of being selectively raised to attach them one after the other. Predetermined sequences are usually used for the attachment process, sometimes slightly adopted to the animals in that two different predetermined sequences are used depending on the geometry of the udder. According to document DE 10 2015 112 308 A1, the visibility of the teats in the imaging process can also be taken into account in the sequence.

Once all teat cups are attached successfully, the main milking process is started, usually preceded by a cleaning step for cleaning the teats. Milking is then commenced by applying the commonly used vacuum-pulsation milking method.

A reliable attachment process of the teat cups is essential for successful milking. A delay during the attachment operation due to an unnecessarily high number of attachment trials leads to additional stress and irritation for the milk producing animal.

It is therefore an object of the present invention to provide a method for an automated attachment process, in which the attachment of the teat cups can be performed with a low rate of overall failure and with as few attachment trials as possible. It is a further object to describe a milking robot and a computer program product for performing this attachment method.

This object is achieved by way of a method and by way of a milking robot having the respective features of the independent claims. Advantageous embodiments and further developments are specified in the dependent claims.

A method according to the invention is characterized by the following steps:
It is sequentially attempted to attach the four teat cups to the identified cow, following an attachment sequence for the order in which the four teat cups are to be attached. During attachment, at least one parameter is measured that characterizes the attachment step of at least one of the teat cups to the respective teat. At least one optimized sequence for the attachment of the four teat cups to the identified cow is then derived by machine learning based on the at least one measured parameter.

The invention relies on the finding that the best attachment sequence is individual for a particular cow, or, in other words, that each cow has its own optimal attachment sequence, which can also change with time due to physiological changes of the cow. Machine learning can be used as a computer implemented tool to derive this optimal attachment sequence individually based on data measured during previous attachment processes.

In an advantageous embodiment of the method, the at least one measured parameter is a value related to the success of the attachment step. The machine learning is thus trained to derive the most successful sequence. The value related to the success of the attachment step can for example be set to a first predetermined value, e.g. the value "1", if attaching the teat cup to the teat was successful and is set to a second value that differs from the first value, e.g. the value "0", if attaching the teat cup to the teat was not successful. Preferably, the value related to the success of the attachment step is set to a third predetermined value that differs from the first and the second value if attaching the teat cup to the teat was not successful and led to a detachment of at least one further teat cup.

In a further advantageous embodiment of the method, the at least one measured parameter is related to a duration time of the attachment step. This way, the attachment sequence can be further optimized, in particular to speed up the milking process. Other parameter taken into account can relate to lactating of the cow.

In a further advantageous embodiment of the method, the measured parameter is determined from camera images taken during the attachment step. In order to reliably determine the success of an attachment step, optical recognition techniques are used. A camera is usually available since the attachment process itself uses a control based on camera images. Alternatively or additionally, the measured parameter is determined from measured pressure data of a vacuum line connected to the teat cups. During attachment, the teat cups are connected to a vacuum line. The vacuum is responsible for keeping the teat cups in place and is used in a pulsation mode for the milking. If, during the attachment process, the pressure in the teat cup remains around atmospheric pressure, the attachment process was not successful. The pressure in the vacuum line thus also provides a reliable measure for the success of the attachment step.

In a further advantageous embodiment of the method, the steps of identifying the cow, attaching the teat cups and measuring the at least one parameter that characterizes the attachment step are repeated using different random attachment sequences in a training phase, also called exploration phase.

In yet a further advantageous embodiment of the method, the steps of identifying the cow, attaching the teat cups, measuring the at least one parameter that characterizes the attachment step and deriving at least one optimized attachment sequence are repeated using one of the at least one optimized sequence determined previously for attaching the teat cups. Accordingly, even with an already optimized sequence, data collected during application of the sequence can be used to train the method further. The method will thereby advantageously be adapted continuously to physiological changes of the cow.

In a further advantageous embodiment of the method, machine learning is based on a reinforcement learning model. In the attachment process, the measured parameter is related to a first state describing which teat cups are attached before the attachment step and a second state describing which teat cups are intendent to be attached after the attachment step, and wherein the machine learning is based on the measured parameter and the first and the second state. The attachment process thus shows the characteristics of a Markov Decision Process (MDP). A Markov Decision Process can be dealt with in machine learning by a Q-Learning algorithm or a Deep Q-Network algorithm. These techniques are thus well suited for the task of optimizing the attachment sequence.

Preferably, for each distinct combination of first and the second states, the measured parameters of a plurality of attachment steps are combined to and expressed as Q-values. The selection of an optimized attachment sequence is based on the Q-values. It is further preferred that information on the at least one measured parameter and the first and second state are transmitted from the milking robot to a superordinate calculation unit that determines the Q-values. In particular if more than one milking robot is present and used to milk the cows, training data can be gathered by each milking robot and will be jointly analyzed to determine the Q-values.

In turn, the Q-values are preferably transmitted from the superordinate calculation unit to the milking robot. Thus, the Q-values can be used be each milking robot to determines the at least one optimized sequence for use in a subsequent attachment process.

Besides the Q-values, a policy for selecting the sequence used in the subsequent attachment process is transmitted from the superordinate calculation unit to the milking robot. The policy is a kind of guideline for the milking robot how to derive the optimized sequence from the Q-values. It mirrors the quality of the Q-values and defines, for example, a random contribution to the process of determining the sequence. A random contribution can be helpful to keep the model dynamic.

A milking robot according to the invention is characterized in that it is adapted to perform the attachment process with different attachment sequences in which the four teat cups are to be attached to the teats of the cow, and that it is adapted to measure at least one parameter that characterizes the attachment step of at least one of the teat cups to the respective teat, wherein at least one optimized sequence for the attachment of the four teat cups to the identified cow is derived by machine learning based on the at least one measured parameter. The same advantages as described in connection with the inventive method arise.

In an advantageous embodiment, the milking robot is further adapted to transmit the at least one measured parameter and a first state describing which teat cups are attached before the attachment step and a second state describing which teat cups are intendent to be attached after the attachment step to a superordinate calculation unit, from which, in turn, it receives Q-values that combine measured parameters of a plurality of attachment steps. This way, a distributed system is created with the option to have a plurality of milking robots which contribute with measured data to train the model and which benefit from the commonly trained model.

A computer program product according to the invention contains a computer program executable by at least one processor of at least one computer, the computer program product enabling the at least one processor to perform a method as described above, when the computer program is executed on the at least one processor. The same advantages as described in connection with the inventive method arise. The computer program can e.g. be executed on at least one processor of the local control unit of the milking robot and/or on at least one processor of the superordinate computational unit.

The invention will be explained in more detail below on the basis of an embodiment with reference to figures. The figures show:
- Fig. 1: a perspective illustration of an udder of a cow while attaching teat cups in an automated milking process;
- Fig. 2: a perspective view on one embodiment of a milking robot;

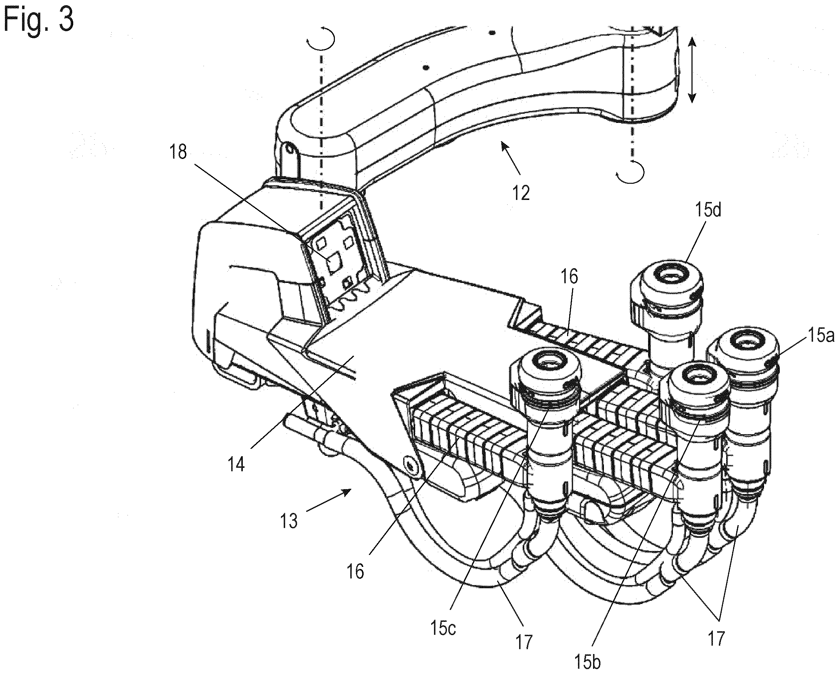

- Fig. 3: a more detailed illustration of a robot arm of the milking robot of Fig. 2;
- Fig. 4: a schematic representation of an automated milking system for performing a method according to the invention;
- Fig. 5: a state diagram representing an exemplary attachment process;
- Fig. 6: a flow chart of one part of a method for performing an attachment process;
- Fig. 7: a flow chart of a further part of a method for performing an attachment process;
- Fig. 8: an example of a first data table used in an embodiment of an attachment process; and
- Fig. 9: an example of a second data table used in an embodiment of an attachment process.

Identical or similar components are provided with the same reference symbols in all figures. For reasons of clarity and readability, not all elements are provided with reference numbers in all figures.

Directional specifications such as, for example, "up", "down", "left", "right" refer to the representations of the respective figure. In case of a vertical direction like "up" and "down", the depicted direction usually is in accord with the real direction.

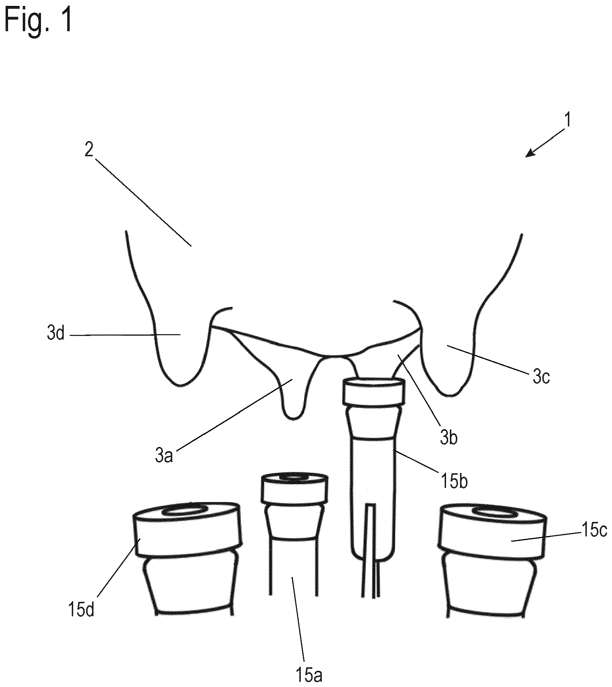

Figure 1 shows an udder 2 of a cow 1 having four teats 3a-d. For milking the cow 1, a milking robot is used that first attaches four teat cups 15a-d to the respective teat 3a-d, cleans the teats 3a-d in a rinsing step and then milks the teats 3a-d by applying a vacuum-pulsation milking process. The teat cups 15a-d are attached sequentially one after the other. Figure 1 depicts a snapshot of the attachment process where teat cup 15b is already attached, while teat cups 15a, c and d are still to be attached. If, in the following, all teats 3a-3d are addressed, they are referred to as "teats 3". In the same manner, if all teat cups 15a-d are addressed, they are referred to as "teat cups 15". Similarly, if a nonspecific teat or teat cup is addressed, it is referred to as "the teat 3" or "the teat cup 15", respectively.

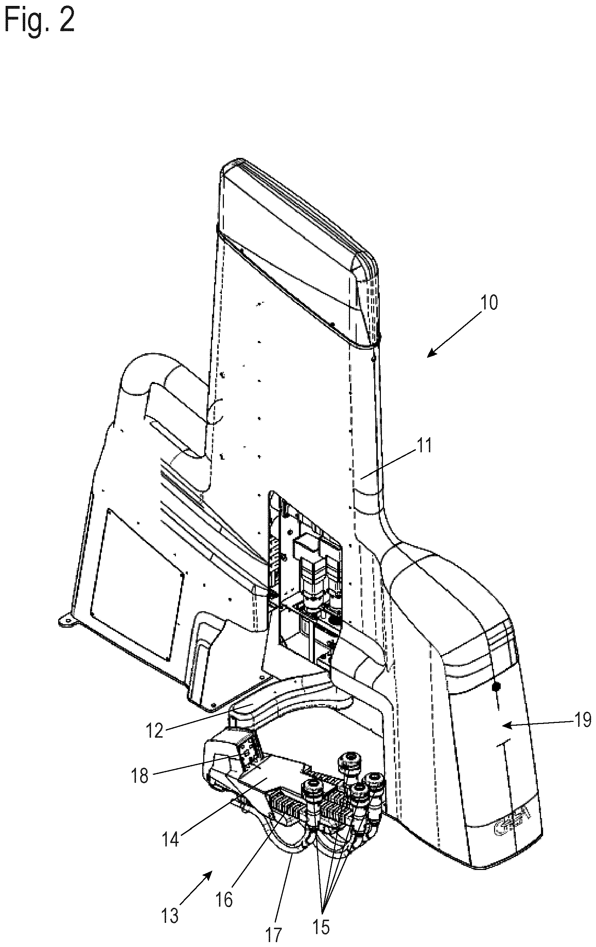

Figure 2 shows a perspective illustration of an exemplary milking robot 10 that performs the attachment task shown in Figure 1 as well as the subsequent cleaning and milking process.

The milking robot 10 can for example be mounted in a milking box. For milking, a cow enters the milking box and stands sideways to the milking robot 10, i.e. one of the longitudinal sides of the milking box is formed by the milking robot 10. In an alternative arrangement, a plurality of such milking robots 10 can be positioned on a circular rotary milking parlor arrangement, each one aligned along a radial direction. The milking robots 10 then additionally act as dividers to form individual milking parlors.

The milking robot 10 comprises a robot arm 12, which can be displaced in the vertical direction by an arm drive unit. The arm drive unit is visible in a service opening in a casing 11 of the robot 10. The service opening is usually closed by a lid during operation. It is only depicted open here for illustrative purposes.

The robot arm 12 can be moved up and down and pivoted about a first pivot axis positioned close to the casing 11. Arranged at a free end of the robot arm 12 is a holder 13, which can be pivoted about a second pivot axis by way of a drive unit (not illustrated here). Mounted on the holder 13 is a milking cluster carrier 14 that carries a milking cluster which provides the four teat cups 15.

The four teat cups 15, are connected to a milking apparatus (not illustrated here either) which is positioned in the casing of the milking robot 10 by milk and vacuum tubes 17.

Each teat cup 15 in the illustrated exemplary embodiment is mounted on the milking cluster carrier 14 by way of a segment element 16. The segment element 16 comprises a plurality of annular hollow segments, through which, inside the segment element 16, a pulling means, for example a rope or chain, extends that can be tensioned via an actuator. In Figure 2, the pulling elements of all segment elements 16 are tensioned, as a result of which all four teat cups 16 are in the illustrated raised position. The pulling means of the segment elements 16 can be actuated selectively via their actuators such that each individual one of the teat cups 15 can be brought into a raised or lowered position. The robot arm 12 as well as the actuators for raising and/or lowering the teat cups 15 are controlled by a local control unit 19 that is located in the robot 10. This control unit also controls valves for milk and vacuum tubes 17 and other actors and sensors used within the attachment, cleaning and milking process.

Furthermore, an imaging sensor 18 is arranged on the holder 13. The imaging sensor can e.g. be a TOF camera which is able to create a two-dimensional (2D) image with a specified number of image points (pixels), wherein in each case distance information for the distance between the image sensor 18 and the object, imaged by the respective pixels, is additionally provided for the image points. In this sense, the imaging sensor 18 can also be considered to be a 3D sensor, since it provides lateral and depth information. In alternative embodiments, other 3D imaging techniques can be used, e.g. two conventional cameras in a stereoscopic arrangement for performing triangulation measurements. Analysis of the 3D information provided by the imaging sensor 18 is preferably performed also locally by the control unit 19.

The arrangement and orientation of the imaging sensor 18 are selected such that, with appropriate orientation of the holder 13, in principle all teats of the animal to be milked can be in the field of view of the 3D sensor 18. Aside from possible obscuration of the teats, the 3D sensor 18 thus also provides information from which the position and orientation of all teats of the milk-producing animal can be ascertained at the same time. The field of view is comparable to the one shown in Figure 1.

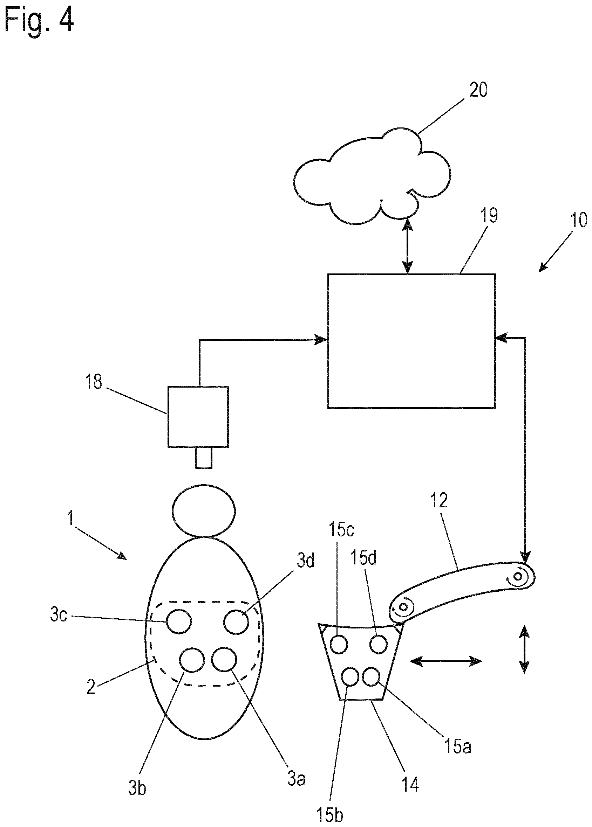

Figure 4 shows the resulting overall system in a schematic representation. According to the system shown in Figure 4, the control unit 19 of the milking robot 10 is connected to a superordinate computational unit 20 that is schematically represented by a cloud. The superordinate computational unit 20 can be a cloud computing service accessible via internet. However, in alternative embodiments the superordinate computational unit 20 can also be a computer or server that is physically present on the farm that hosts the milking robot 10. If more than one milking robot 10 is present on the farm and can be used by the cows of the farm, the computational unit 20 is preferably accessible by all milking robots 10 that perform the inventive method. Even then, the computational unit 20 can as well be physically integrated into one of the milking robots 10.

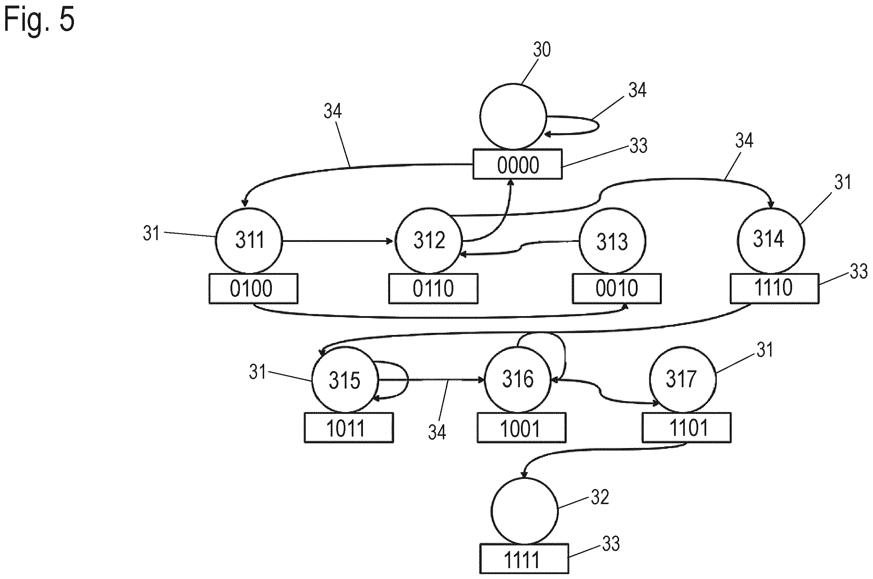

A milking robot 10 according to the present invention is enabled to perform the attachment process in arbitrary sequences, i.e. there is no fixed order in which the individual teat cups 15a-15d are attached to the respective teats 3a-3d. The milking robot 10 is further enabled to find an optimized sequence for each individual cow by machine learning, as will be explained in connection with Figures 5 to 9 in the following.

Figure 5 first shows the course of an exemplary attachment process in a state diagram. It is used to describe the data representation of the process and the variety of a state that the system runs through in the course of the process.

The attachment process starts with an initial state 30, in which none of the teat cups 15 is attached to the respective teat 3.

Each state of the process is described by a state representation 33, which essentially is a four-digit binary number. Each digit stands for one of the respective teat cups or teats, for example in the order "a, b, c, d", such that the first digit represents this attachment state of teat cup 15a or teat 3a, the second digit the attachment state of teat cup 15b or teat 3b, the third digit the state of teat cup 15c or teat 3c and the fourth digit the attachment state of teat cup 15d or teat 3d, respectively.

The attachment state itself is binary, i.e. a teat cup 15 either is attached (represented by the binary digit "1") or it is not attached (represented by the binary number "0"). Accordingly, the state representation 33 of the initial state 30 is "0000".

Starting from this initial state 30, the milking robot 10 in this example tries to attach teat cup 15b to teat 3b. The trial to attach a particular teat cup 15 is a sub-step in the attachment process and also called an "action" in the following. There are generally four actions possible which are denoted by the index of the teat cup 15a-d that the robot 10 tries to attach, written in capital letters. Accordingly, actions A-D can be performed, corresponding to the trial to attach teat cup 15a-d.

Assuming that the first action B of the attachment process was successful, an intermediate state 31, more concrete a first intermediate state 311, is taken on that is represented by the binary number "0100" as the new state representation 33.

Each action aims at a transition 34 in the state diagram. Transitions 34 either lead to a different state or let the system stay in the same state.

In one particular attachment process, a transition 34 can either happen or not. However, if the same sub-step is performed several times with the same cow, a probability P for a transition can be derived for each sub-step. The probability P depends on the starting state, e.g. the initial state 30, the state to be achieved, e.g. the first intermediate state 311, and an action connected to this transition, here in the example the action B to attach teat cup 15b. The probability P can thus be expressed as *P*(*initial state, action, achieved state*)*,* or, for this particular sub step, as P(0000, B, 0100). The probability is a number ranging from 0 (never successful) to 1 (always successful). There is a reverse probability (1-P) that gives the probability that the process remains in the same state or ends up in yet another state after having tried to perform a certain action. All transitions 34 shown in fig. 5 are connected to such probabilities that can be derived from a larger number of trials.

Since the probabilities P for the transitions 34 only depend on the involved states, the attachment process meets the characteristics of a Markov Decision Process (MDP).

In the example shown, a further teat cup 15, namely teat cup 15c was then attempted to be attached, which, in case of success leads to a further intermediate state 31, here denoted as intermediate state 312, with its representation 33 being "0110". If this second attachment process had not been successful, the system may stay in the same state or emerge into another intermediate state 31, for example intermediate state 313, with its state representation 33 being "0010". In this case, the related transition 34 was partly successful in that teat cup 15c was indeed attached, however it led to a detachment of the teat cup 15b that had already been attached beforehand. Accordingly, the system then tries a further transition 34 to re-attach teat cup 15b which, if successful, would also lead to intermediate state 312.

In the example shown in Figure 5, a couple of transitions 34 to a number of intermediate states 311-317 are run through before the system finally ends up in a final state 32 with the binary number "1111" as its state representation 33. In this final state 32, all teat cups 15a-15d are successfully attached to teats 3a-3d, meaning that the overall attachment process was successful and that the milking process can be continued with first cleaning the teats and subsequently starting the actual milking process.

According to the invention, the sequence for attaching the four teat cups 15a-d is optimized for each identified individual cow 1 by machine learning, where the machine learning is based on at least one value measured during proceeding attachment processes. In the embodiment shown in Figure 4, some parts of the procedure are performed by the milking robot 10 and some parts of the procedure are performed by the superordinate computational unit 20.

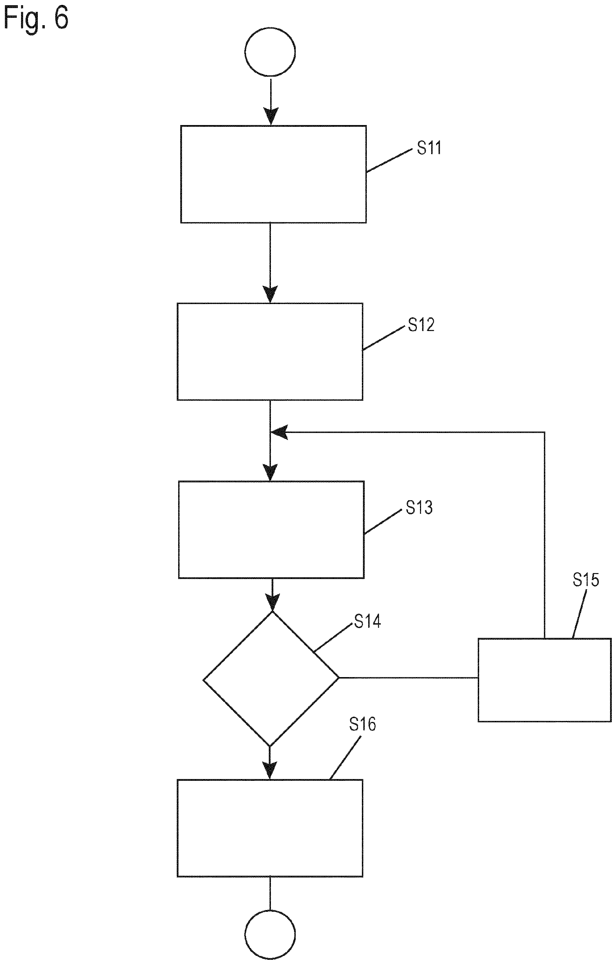

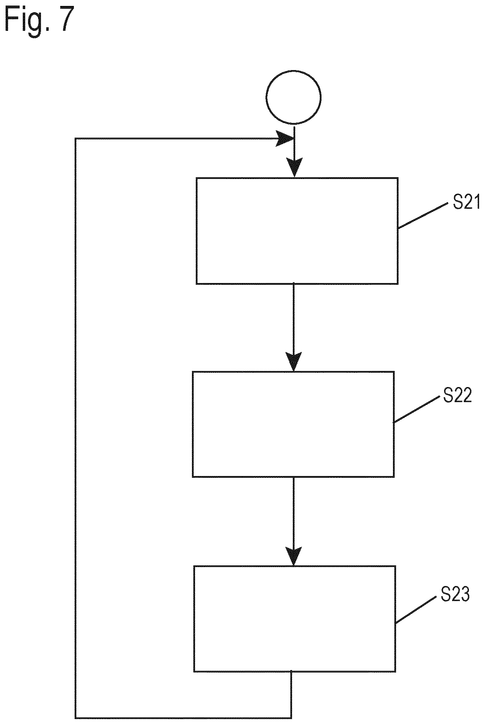

Figures 6 and 7 show flow chart diagrams of an embodiment of an inventive method, wherein Figure 6 shows parts of the method that are performed by the milking robot 10 and Figure 7 shows parts of the method that are performed by the superordinate computation unit 20.

The flow chart in Figure 6 shows one milking process for one individual cow. This process starts in a step S11 with a cow, for example the cow 1 shown in Figure 4, entering a milking parlor.

After the cow 1 has entered the milking parlor in step S11, it is identified, for example by reading out an RFID (Radio Frequency Identification) tag, the cow 1 is chipped with. The information read out is sent to the control unit 19 of the milking robot 10 and eventually as well to a farm management system that in turn provides additional information on cow 1.

It is assumed that cow 1 has not yet used the automated milking system or not used it often. The milking system therefore is first operated in a training mode concerning this individual cow 1 in this example. It is noted that a distinction between a training mode (also called exploration mode) and a production mode (also called exploitation mode) is not mandatory. As also shown below, training and production can be performed simultaneously in other embodiments.

In a next step S12 of this training or exploitation mode, a predetermined and/or arbitrary attachment first action of an attachment sequence is selected. By way of example, attachment of teat cup 15b, i.e. action B, is selected to be the next step in the attachment process.

In a next step S13, the milking robot 10 is controlled to attach teat cup 15b to teat 3b of cow 1, i.e. to perform action B. The milking robot 10 then determines whether this step was successful or not. There are several ways to determine whether an attachment process was successful or not. For example, the camera 18 that is used to determine the position of the teats 3a-d in the attachment process can also be used to observe whether an attachment process was successful or not. Another alternative or additional way is to measure the pressure that builds up in the milking system during the attachment process. During attachment, the teat cup 15b to be attached is connected to a vacuum line. The vacuum is responsible for keeping the teat cup 15b in place and is used in a pulsation mode for the milking. If, during the attachment process, the pressure in the teat cup 15b and accordingly the associated vacuum line 17 remains around atmospheric pressure, the attachment process was not successful.

Usually, a certain time limit is set until it is finally decided that a sub-step of the attachment process turned out not to be successful.

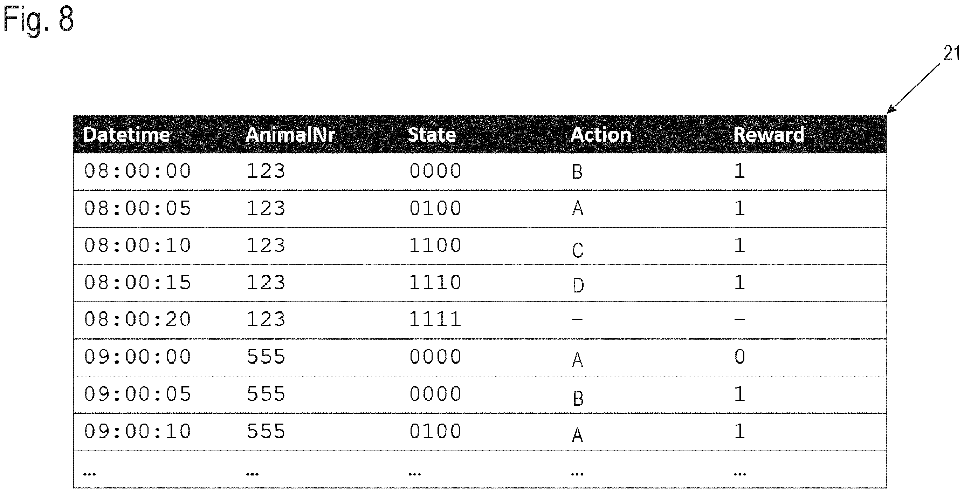

Data related to the attachment actions is collected by the control unit 19 of the milking robot 10 and by way of example shown in table 21 in Figure 8. The first attachment sub-step in step S13 was for example performed with cow 1 identified as animal number "123". The attachment process started with a state "0000", meaning that none of the teat cups 15a-d was attached at the beginning of this step S13. The action to be performed is to try to attach teat cup 15b, which is represented in the column "Action" by the respective index "B". The last column in table 21 shows the outcome of the attachment process. In the embodiment shown, there are two possible options, a reward of "1" if the process was successful and a reward of "0" if the process was not successful. As an example, the reward can be calculated as the *"number of attached teat cups after the action"* minus *"number of attached teat cups before the action".* The reward can thus even become negative if the attachment process was unsuccessful and a teat cup that was attached beforehand got detached during the action.

Extended reward schemes could be implemented in alternative embodiments. For example, the duration of an attachment sub-step could serve as an additional reward means. Furthermore, lactation data could be additionally used to calculate the reward.

In a next step S14 it is checked whether all four teat cups 15 are successfully attached. If not, the method is continued with a step S15, in which the next action to be performed is selected. This can be again be according to a predetermined scheme or just by random selection.

The method then reverts back to step S13 for performing the next sub-sequence. As apparent from table 21 in Figure 8 the next actions that are performed are "A", "C" and "D". All four sub-steps were successful and thus were rewarded a "1".

When all four teat cups are successfully attached, the method continues with a step S16, where the collected data according to table 21 is sent from the local control unit 19 to the superordinate computing unit 20. After the cow 1 then has left the milking parlor, the method can start again with step S11 for another cow (cow number 555 in the example of table 21 in Figure 8).

The data sent in step S16 is received in step S21 (Figure 7) by the superordinate computing unit 20 and stored cow-individual in a database in a next step S22.

Since the attachment process behaves like a Markov Decision Process, machine learning can for example be based on an algorithm called Q-learning. Based on the received measured rewards, a Q-value is calculated for each possible transition, defined by the starting state and the action. The Q-table is cow-individual and kept by the superordinate computing unit 20. All data received in step S21 is used to calculate or to refine the Q-value table in a subsequent step 23.

Furthermore, an ε-value is determined, for example such that it may resemble the reliability of the Q-values. The ε-value is related to a so-called ε-policy. According to the ε-policy, a random component is mixed in when choosing the next attachment action. The more reliable the Q-values are, the lower the ε-value can be chosen and the lower the random contribution will be.

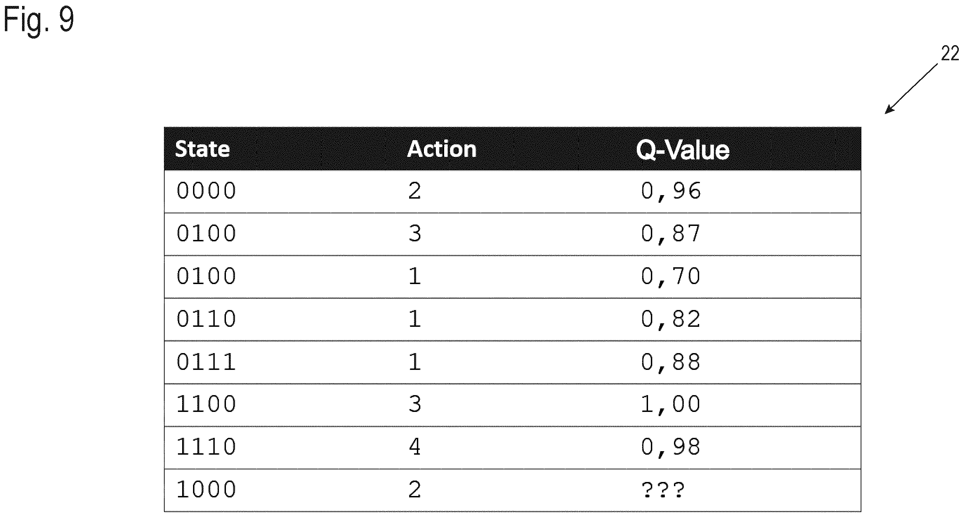

An example of a part of a Q-table 22 is shown in Figure 9. The Q-value table 22 can be used by the milking robot 10 to determine the most successful attachment sequence for an identified cow once the exploration phase is finished. This happens in the so-called exploitation phase. As already stated beforehand, exploration and exploitation phases are not necessarily separated in an implementation.

The exploitation phase is explained with the aid of a further flow diagram in Figure 7. Steps S11, S13, S14 and S16 are identical in the exploitation phase to the respective steps in the exploration phase.

Steps S12 and S15 differ in the exploitation phase: In step S12, the Q-table 22 and the ε-value for the cow identified in step S11 are retrieved from the superordinate computing unit 20. A next action to be performed is then determined in steps S12 and S15 not based on a predetermined sequence or purely random, but based on the received Q-values while adhering to the received ε-policy. The milking robot 10 thus exploits the learned data to use the most efficient attachment sequence.

Data on the actual success of the sub-steps performed as shown in a table 21 of Figure 8 can be sent to the superordinate computation unit 20 also in the exploitation phase. This data can be used to improve the Q-values and probably adapt the ε-value continuously. It can alternatively be provided that no reward information is considered in the exploitation phase. It can in both cases be intended to repeat the exploration phase after some time to account for changes in the physiology of the cow. During retraining, the previous data may be thrown away and new data may be acquired to create a new Q-table.

First assessments of the method according to the invention show an increase in attachment performance of up to around 8 %, meaning that 8 % less unsuccessful sub-steps occur.

In an alternative embodiment, Q-learning can be used as the machine learning algorithm in connection with a policy called "Upper Confidence Bound" (UCB) rather than ε-policy.

One difference to the ε-policy algorithm is that there is no global value (like the ε-value) that is related to the reliability of the Q-values and that influences whether or not the next attachment step is chosen randomly. In contrast, according to the UCB-algorithm, a confidence level is defined and determined for each action individually. Rather than performing exploration by simply selecting an arbitrary action, chosen with a probability that is the same for all actions and eventually even kept constant over time, the UCB-algorithm quickly changes its exploration-exploitation balance as it gathers more knowledge on the individual success-rates of actions.

It turned out that applying the UCB-algorithm in the present invention leads to less exploration and a very steep learning curve. The milking robot only needs very few attachment steps to find a well working attachment sequence.

In further alternative embodiments, machine learning algorithms other than basic Q-learning like "State-Action-Reward-State-Action" (SARSA) or Deep-Q-Networks (DQN) can be used instead.

### List of reference numbers

- 1: Cow
- 2: Udder
- 3: Teat
- 3a, b, c, d: Specific teat

- 10: Milking robot
- 11: Housing
- 12: Carrying arm
- 13: Arm segment
- 14: Milking cluster
- 15: Teat cup
- 15a, b, c, d: Specific teat cup
- 16: Segment element
- 17: Milk- and vacuum tubes
- 18: Imaging sensor (camera)
- 19: control unit

- 20: Superordinate computational unit
- 21: Table
- 22: Q-value table

- 30: Initial state
- 31: Intermediate state
- 311-317: Particular intermediate state
- 32: Final state
- 33: State representation
- 34: Transition

- S11-S16: Method steps (milking robot)
- S21-23: Method steps (superordinate computational unit)

## Claims

1. Method for attaching teat cups (15) in an automated milking process,
wherein the automated milking process is performed by a milking robot (10) that is arranged for sequentially attaching the teat cups (15) to teats (3) of a cow (1), the method comprising the steps of:
a) determining an identifier of the cow (1) to be milked;
b) sequentially attempting to attach the four teat cups (15) to the identified cow (1), following an attachment sequence in which the four teat cups (15) are to be attached;
c) measuring at least one parameter that characterizes the attachment step of at least one of the teat cups (15) to the respective teat (3); and
d) deriving at least one optimized sequence for the attachment of the four teat cups (15) to the identified cow (1) by machine learning based on the at least one measured parameter.

2. The method according to claim 1, wherein the at least one measured parameter is a value related to the success of the attachment step.

3. The method according to claim 2, wherein the value related to the success of the attachment step is set to a first predetermined value if attaching the teat cup to the teat was successful and is set to a second value that differs from the first value if attaching the teat cup to the teat was not successful.

4. The method according to claim 3, wherein the value related to the success of the attachment step is set to a third predetermined value that differs from the first and the second value if attaching the teat cup (15) to the teat was not successful and led to a detachment of at least one further teat cup (15).

5. The method according to one of claims 1 to 4, wherein the at least one measured parameter is related to a duration time of the attachment step.

6. The method according to one of claims 2 to 5, wherein the measured parameter is determined from camera images taken during the attachment step.

7. The method according to one of claims 2 to 6, wherein the measured parameter is determined from measured pressure data of a vacuum line (16) connected to the teat cups (15).

8. The method according to one of claims 1 to 7, wherein the steps a) to c) are repeated using different random attachment sequences in a training phase.

9. The method according to one of claims 1 to 8, wherein the steps a) to d) are repeated using one of the at least one optimized sequence determined in a previously performed step d) as the attachment sequence in step b).

10. The method according to one of the claims 1 to 9, wherein the machine learning is based on a reinforcement learning model.

11. The method according to one of claims 1 to 10, wherein the measured parameter is related to a first state describing which teat cups are attached before the attachment step and a second state describing which teat cups are intendent to be attached after the attachment step, and wherein the machine learning is based on the measured parameter and the first and the second state.

12. The method according to claim 11, wherein for each distinct combination of first and the second states, the measured parameters of a plurality of attachment steps are combined to and expressed as Q-values.

13. The method according to claim 12, wherein machine learning in step d) is based on the Q-values.

14. The method according to claim 13, wherein machine learning in step d) uses a Q-Learning algorithm or a Deep Q-Network algorithm.

15. The method according to one of claims 11 to 14, wherein information on the at least one measured parameter and the first and second state are transmitted from the milking robot to a superordinate calculation unit (20) that determines the Q-values.

16. The method according to claim 15, wherein the Q-values are transmitted from the superordinate calculation unit (20) to the milking robot (10) and wherein the milking robot (10) determines the at least one optimized sequence for use in a subsequent attachment process.

17. The method according to claim 16, wherein furthermore a policy for selecting the sequence used in the subsequent attachment process is transmitted from the superordinate calculation unit (20) to the milking robot (10).

18. A milking robot (10) arranged for sequentially attaching teat cups (15) to teats (3) of a cow (1) comprising a sensor for assessing the attachment process, **characterized in that** the milking robot
- is adapted to perform the attachment process with different attachment sequences in which the four teat cups (15) are to be attached to the teats (3) of the cow (1); and
- is adapted to measure at least one parameter that characterizes the attachment step of at least one of the teat cups (15) to the respective teat (3),
wherein at least one optimized sequence for the attachment of the four teat cups (15) to the identified cow (1) is derived by machine learning based on the at least one measured parameter.

19. The milking robot (10) according to claim 18, further adapted to transmit the at least one measured parameter and a first state describing which teat cups (15) are attached before the attachment step and a second state describing which teat cups (15) are intendent to be attached after the attachment step to a superordinate calculation unit (20), from which, in turn, it receives Q-values that combine measured parameters of a plurality of attachment steps.

20. A computer program product, containing a computer program executable by at least one processor of at least one computer, the computer program product enabling the at least one processor to perform a method according to any of claims 1 to 17, when the computer program is executed on the at least one processor.
